# EUROPEAN PATENT SPECIFICATION

(11) **EP 1 638 319 B1**
(45) Date of publication and mention of the grant of the patent: **30.05.2007**
(21) Application number: 05027902.5
(22) Date of filing: 17.11.2004
(51) Int. Cl.: H04N 5/232, G02B 7/30, G02B 7/36

(54) **Autofocus system**
Autofokussystem
Système autofocus

(30) Priority: 13.02.2004 JP 2004037184; 21.11.2003 JP 2003392692
(43) Date of publication of application: 22.03.2006
(62) Divisional of application: 04027290.8
(73) Proprietor: Fujinon Corporation, Saitama-shi, Saitama (JP)
(72) Inventor: Sasaki, Tadashi, Saitama-shi, Saitama (JP); Ouchi, Syunichiro, Saitama-shi, Saitama (JP)
(74) Representative: Grünecker, Kinkeldey, Stockmair & Schwanhäusser Anwaltssozietät

(56) References cited:
- US-A- 4 614 974
- US-A- 5 270 765
- US-A1- 2001 045 989
- PATENT ABSTRACTS OF JAPAN vol. 2003, no. 11, 5 November 2003 (2003-11-05) & JP 2003 215437 A (PENTAX CORP), 30 July 2003 (2003-07-30)

## Description

### BACKGROUND OF THE INVENTION

### Field of the Invention

The present invention relates to an autofocus system and more particularly to an autofocus system which performs automatic adjustment of focus in combination of an AF of a contrast system applied for photographing a moving picture in a television camera, etc. or in combination of the AF of the contrast system and an AF of other system.

### Description of the Related Art

The autofocus (AF) system employed in a television camera or a video camera typically uses a contrast system. The contrast system extracts, by means of a filter, high frequency components from a video signal obtained by photographing a subject and evaluates a contrast level (sharpness) of the subject image based on the high frequency components. Also, the focus (focus lens) of a photographing lens is arranged to be controlled so as to enable the evaluated value (hereinafter referred to as the focus evaluation value) to be the maximum (local maximum) (for example, Japanese Patent Application Publication No. 2002-365518).

An object to be focused by the AF is also in many cases limited to a partial range of a subject within a photographing range (in a screen), and in the AF of the above-mentioned contrast system, the above-mentioned focus evaluation value is detected from a partial range of a video signal limited from the video signal of each field, as a result of which an AF object range (hereinafter referred to as AF area) is limited to a partial range of the screen. Although, in some cases, the AF area may be fixed to a predetermined position in the screen, for example, in the central part of the screen, the other case is also known in which the AF area is arranged to be able to be changed by a photographer, etc. into a desired position in accordance with a positional change of the main photographic subject in the screen.

On the other hand, besides the above-mentioned contrast system, an active type trigonometrical range finding system and a double image matching system, etc. are also generally known as the AF system employed in cameras.

In the AF of the contrast system, there may be a case where the AF is not performed properly under a condition that a peak of the focus evaluation value is hardly detectable even by means of a positional change of the focus, such as in the case where a photographic subject is dark, or where the contrast of a photographic subject is originally low. For this reason, a system in which the contrast system is combined with the other system so as to perform AF is considered. Such system enables focusing to be performed accurately by the AF of the other system even in a condition that focusing is difficult to be performed by the AF of the contrast system. In addition, for example, the AF in which an active type is used together with a passive type has already been disclosed in Japanese Patent Application Publication No. 10-48509, and No. 10-221065.

US4614974 discloses a camera using a range finder attached below the lens of the camera. When the lens move for focussing, then the range finder is moved as well.

### SUMMARY OF THE INVENTION

Object of the present invention is to provide an autofocus system which allows the AF area to be changed in the AF of the range finding system, so as to enable the AF area to be changed properly in the case where the AF of the contrast system and the AF of the other system (range finding system) are combined so as to perform AF.

An autofocus system according to a first aspect of the present invention comprises: a range finding device which ranges a distance to a subject in an AF area which is an object range of AF within the whole photographing range photographed via a photographing lens; and an AF control device which performs control of autofocus based on a ranged value detected by the range finding device and which automatically performs focusing on the subject, characterized by comprising: an optical path for AF branched for autofocus from the optical path of the photographing lens; a range finding module arranged at the optical path for AF and provided with an optical element of the range finding device; a driving device which moves the range finding module within a surface perpendicular to the optical axis of the optical path for AF; an AF area assigning device which assigns the range of the AF area; and a control device which moves the range finding module by means of the driving device and which controls the position of the range finding module so that the subject ranged by the range finding device becomes a subject within the AF area assigned by the AF area assigning device.

According to the first aspect of the present invention, the range finding object for the AF of the range finding system can be changed into an arbitrary subject in the photographing range.

In the autofocus system according to a second aspect of the present invention, the autofocus system, according to the first aspect of the present invention, further comprises a contrast detection device which detects a contrast of a subject within the AF area in the whole photographing range photographed via the photographing lens, and the AF control device performs control of autofocus based on an evaluation value of contrast detected by the contrast detection device and/or a range finding value detected by the range finding device so as to automatically perform focusing on the subject.

According to the second aspect of the present invention, even in the case where the autofocus (AF) of the contrast system using the contrast detection device cannot perform focusing accurately, the focusing can be performed accurately by utilizing the AF of the range finding system using the range finding device. In addition, since an object for ranging in the AF of the range finding system is also changed into a subject within the AF area which is the AF object range in the AF of the contrast system, together with the change of the AF area, the AF area can be changed even in the case where the AF of the contrast system and the AF of the range finding system are combined for performing AF.

In the autofocus system of according to a third aspect of the present invention, the contrast detection device, according to the second aspect of the present invention, images a subject by means of a subject light guided to the optical path for AF and detects a contrast of the subject. That is, the optical path for AF is used in common by the contrast detection device and the range finding device, so that the optical path for AF can be used effectively and the configuration of the photographing lens can be simplified.

In the autofocus system of according to a fourth aspect of the present invention, the range finding method of the range finding device, according to the first or second aspect of the present invention, is a trigonometrical range finding method, and optical elements of the range finding module include a light emitting element which emits a range finding light and a light receiving element which receives the range finding light.

In the autofocus system of according to a fifth aspect of the present invention, the range finding method of the range finding device, according to the first or second aspect of the present invention, is a double image matching method, and an optical element of the range finding module is a light receiving element which receives a subject light from a subject.

According to the present invention, an object range of autofocus is arranged to coincide with an object range of exposure adjustment in the imaging device for AF for autofocus, thereby enabling a luminance level of a video signal of the AF area acquired for autofocus to be appropriate, and focusing by autofocus to be performed surely and accurately.

Further, in the case where the AF of the contrast method and the AF of the other method are combined to perform AF, the range of the AF area can also be changed properly.

### BRIEF DESCRIPTION OF THE DRAWINGS

FIG. 1 is a schematic representation of a camera for photographing a moving picture, for example, of a television camera, etc., to which the present invention is applied;
FIG. 2 is a view in which an imaging element for video and a pair of imaging elements for AF, each is shown on the same optical axis;
FIG. 3 is the block diagram showing a construction of a system mainly related to autofocus in a camera main body and a lens device;
FIG. 4 is an illustration used for explaining the detection principle of a focus state;
FIG. 5A and FIG. 5B are illustrations used for explaining the exposure adjustment for AF;
FIG. 6A and FIG. 6B are illustrations used for explaining the exposure adjustment for AF;
FIG. 7 is an illustration used for explaining the exposure adjustment for AF;
FIG. 8 is a block diagram showing the whole construction of an autofocus system to which the present invention is applied;
FIG. 9 is a perspective view showing a construction of a range finding module and a direct-acting motor, and a schematic construction of an optical path of a photographing lens to a range finding module; and
FIG. 10 is a flowchart showing a processing procedure for setting the AF area in CPU.

### DETAILED DESCRIPTION OF THE PREFERRED EMBODIMENTS

The preferred embodiments of an autofocus system according to the present invention are described below with reference to accompanying drawings.

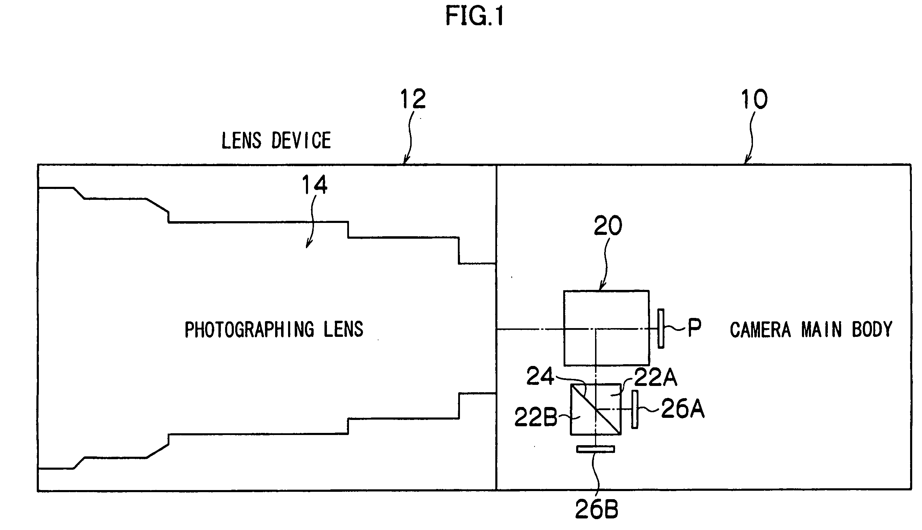

FIG. 1 is a schematic representation of a camera for photographing a moving picture, for example of a television camera, etc., to which the present invention is applied. The camera (television camera) shown in the figure comprises a lens interchangeable camera main body 10 and a lens device 12 mounted on the camera main body 10. The lens device 12 includes a photographing lens 14 (optical system) which comprises optical components, such as various fixed and movable lens groups and an iris, and a control device (control system, not shown) for electrically controlling the movable lens (group) and the iris of the photographing lens 14.

In the camera main body 10, a color separation optical system 20 (of which detailed configuration is not shown) is arranged and a subject light passing through the photographing lens 14 is decomposed into each light of wavelength band of red (R), green (G), and blue (B) by the color separation optical system 20. The light decomposed into each color by the color separation optical system 20 is incident on an imaging surface of an imaging element (two dimensional CCD) for video corresponding to each color, respectively, and is subjected to the photoelectric conversion by each imaging element for video. A video signal for broadcast (video signal for recording or reproduction) is then generated by a signal processing circuit (not shown). The imaging element for video comprises three imaging elements for R, G, and B, which are arranged at positions of an equal distance in the optical path length of the subject light and are shown by one imaging element for video P in the figure. The camera main body 10 may be so-called a type for photographing a collar video or a monochromatic video with one imaging element, and the imaging element for video P may be understood as designating one of the imaging element. In this case, the color separation optical system 20 is not arranged.

A device (not shown) for branching the subject light for focus detection from the subject light incident on the color separation optical system 20 is provided for the color separation optical system 20, and for example, the subject light before being decomposed into each color of R, G, and B is branched from the subject light for video as a subject light for focus detection (for autofocus (AF)). An autofocus in the system according to the present invention is a contrast system, which is an autofocus of an optical path length difference system as will be described below, in which a subject light for AF is branched.

The subject light for AF branched from the subject light for video is incident on a half mirror surface 24 constructed by two prisms 22A, 22B, and is equally divided into a reflected light and a transmitted light. Then, the reflected light is incident on the imaging surface of an imaging element 26A for AF, and the transmitted light is incident on the imaging surface of an imaging element 26B for AF. The subject light incident on each imaging elements 26A, 26B for AF is photo-electrically converted, respectively, and is outputted as a video signal from each imaging elements 26A, 26B for AF. The imaging elements 26A, 26B for AF, each is for photographing a monochromatic picture, and video signals generated by the imaging elements 26A, 26B are assumed to be luminance signals.

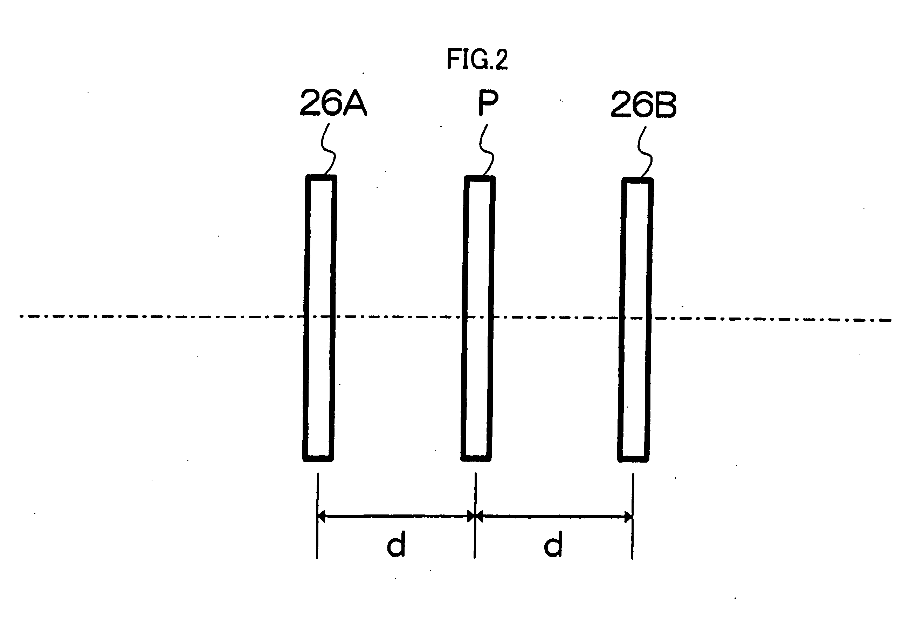

Here, FIG. 2 is a view in which an imaging element for video P and a pair of imaging elements 26A, 26B for AF are shown on the same optical axis. As shown in the figure, the optical path length of a subject light incident on the imaging surface of the imaging element 26A for AF is shorter than the optical path length of the subject light incident on the imaging surface of imaging element 26B for AF, and the optical path length of the subject light incident on the imaging surface of the imaging element for video P is set to the middle length between those optical path lengths. That is, the imaging surfaces of a pair of the imaging elements 26A, 26B for AF are arranged at front and rear equidistant positions with respect to the imaging surface of the imaging element for video P, respectively. Accordingly, the subject light incident on the photographing lens 14 is arranged to be imaged at front and rear equidistant positions with respect to the imaging surface of the imaging element for video P by a pair of the imaging elements 26A, 26B for AF.

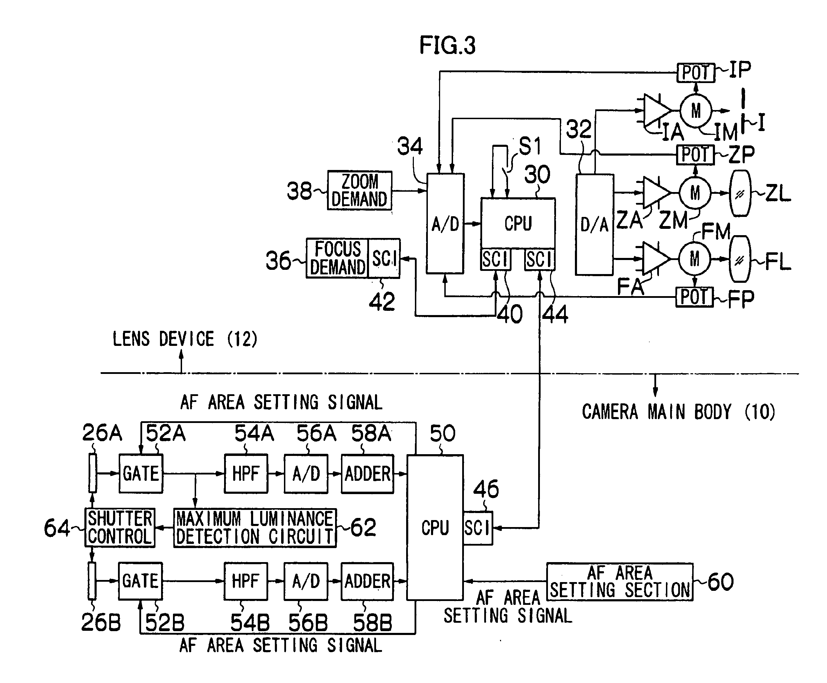

FIG. 3 is a block diagram showing a system configuration mainly relating to autofocus in the above-mentioned camera main body 10 and the lens device 12. In the photographing lens 14 of the above-mentioned lens device 12, there are arranged a focal lens (group) FL which is driven for focusing in the direction of the optical axis and a zoom lens (group) ZL which is driven for changing the image magnification (focal distance) in the direction of the optical axis as movable lens (group). An iris I which is driven to open/close for changing the diaphragm value is also arranged. The focal lenses FL, the zoom lens ZL, and the iris I are connected to a motor FM for focus, a motor ZM for zoom, and a motor IM for iris, respectively, and are arranged to be driven by each motor FM, ZM, IM.

Each motor FM, ZM, IM is connected to an amplifier FA for focus, an amplifier ZA for zoom, and an amplifier IA for iris, respectively. When a driving signal is given to each amplifier FA, ZA, IA via a D-A converter 32 from a CPU 30 mounted in the lens device 12, a voltage corresponding to the driving signal is arranged to be applied to each motor FM, ZM, IM, so as to enable each motor FM, ZM, IM to be driven at a speed in accordance with the applied voltage.

Accordingly, the CPU30 is arranged to be capable of controlling the focal lens FL, the zoom lens ZL, and the iris I at a desired operating speed with the voltage value of the driving signal outputted to each amplifier FA, ZA, IA. The position information indicating current positions of the focal lens FL, the zoom lens ZL, and the iris I is also arranged to be supplied for the CPU 30 via an A-D converter 34 from potentiometers FP, ZP, IP, respectively, so that the CPU 30 is arranged to be capable of controlling the operating speed by referring to the current positions so as to control the positions of the focal lens FL, the zoom lens ZL, and the iris I.

On the other hand, the lens device 12 is allowed to be connected as lens accessories (attachment) with a lens controller such as a focus demand 36 for manually operating the focus and a zoom demand 38 for manually operating the zoom. The focus demand 36 shown in the figure is a digital-type lens controller, and when the focus demand 36 is connected to the lens device 12, a communication link between the focus demand 36 and the CPU 30 of the lens device 12 is effected by SCIs (serial communication interface) 40, 42, enabling various signals to be exchanged by the serial communication. Thereby, a command signal indicating a target position for focusing based on the manual operation of a predetermined focus operating member (for example, focus ring) is supplied for the CPU 30 from the focus demand 36. The CPU 30 controls the position of the focal lens FL based on the command signal at the time of manual focus mode, so as to set the focus to the target position given by the command signal.

The zoom demand 38 is an analog-type lens controller, and when the zoom demand 38 is connected to the lens device 12, a command signal indicating a target speed of the zoom based on the manual operation of a zoom operating member is supplied for the CPU 30 via the A-D converter 34, for example. The CPU 30 controls the operating speed of the zoom lens ZL based on the command signal so as to move the zoom at the target speed given by the command signal.

The lens device 12 is also provided with an AF switch S 1 for switching a manual focus mode and an autofocus mode. The CPU 30 performs processing of the manual focus, when the AF switch S 1 is turned off, and performs processing of the autofocus when the AF switch S 1 is turned on. In the case of the manual focus mode, the CPU 30 controls the focal lens FL as described above based on the command signal from the focus demand 36.

On the other hand, in the case of the autofocus mode, the CPU 30 performs a serial communication with a CPU 50 of the camera main body 10 via SCIs 44, 46 so as to acquire the focus information from the camera main body 10, as will be described in detail below. And the focal lens FL is controlled based on the focus information so that an automatic adjustment of focus is performed.

The camera main body 10 is mounted with processing circuits 52A to 58A and 52B to 58B, etc. for generating, as the focus information, the focus evaluation value indicating the contrast level of a picture photographed by each of the above-mentioned imaging elements 26A, 26B for AF. Since the processing circuits 52A to 58A, and 52B to 58B are similarly constructed for each of the imaging elements 26A, 26B for AF, the processing circuits 52A to 58A constructed for the imaging element 26A for AF are described below.

As shown in the figure, a video signal (luminance signal) outputted from the imaging element 26A for AF is first inputted into the gate circuit 52A so that only a signal within a predetermined AF area is extracted from the video signal. The AF area indicates the object range of a subject to be focused by AF within the imaging surface (photographing range) of the imaging element 26A for AF, and is arranged, for example, such that an operator can specify the position and size, etc. of the AF area by an AF area setting section 60. The photographing range of the imaging elements 26A, 26B for AF and the photographing range of the imaging element for video P are assumed to approximately coincide. As a method for specifying the AF area, provided that the size and shape of the AF area are determined, any method may be applied, for example, such as a method for specifying the central position of the AF area by means of direction indication switches, such as a joystick, while viewing a view finder (not shown), and a method for specifying by touching a touch panel installed in the view finder. It is also possible to enable the size and the shape, etc. of the AF area to be specified by a predetermined procedure using the similar operation devices. The CPU 50 recognizes the position and the size, etc. of the AF area specified by the operator from the AF area control signal supplied from the AF area setting section 60, and supplies the AF area setting signal for setting up the AF area to the gate circuit 52A.

Then, a high pass filter (HPF) 54A cuts off low frequency components of the video signal extracted from the range of the AF area by the gate circuit 52A, so as to extract only high frequency components of the video signal. The video signal of the high frequency components extracted by the HPF 54A is converted into a digital signal by a A-D converter 56A.

The video signal outputted by the A-D converter 56A as a digital signal is then inputted into an adder 58A, and is integrated by the adder 58A per one picture signal (one field signal in a video signal of interlace scheme). The signal obtained by the integration of the adder 58A is a value indicating the degree of focusing (contrast level) on the subject in the AF area, and the value obtained by the adder 58A is successively read by the CPU 50 as the focus evaluation value. The focus evaluation value thus obtained by the video signal from the imaging element 26A for AF is referred to as a focus evaluation value of channel (ch) A, and the focus evaluation value similarly obtained by the video signal from imaging element 26B for AF is referred to as a focus evaluation value of ch B.

The CPU 50 of the camera main body 10 transmits to the CPU 30 of the lens device 12 the focus evaluation values of ch A and ch B thus obtained as the focus information. A maximum luminance detection circuit 62 and a shutter control circuit 64 included in the camera main body 10 in the figure will be described below.

Next, the AF processing in the CPU 30 of the lens device 12 is generally described in the following. As described above, the current focus state of the photographing lens 14 on the imaging surface of the imaging element for video P can be detected based on the focus evaluation value of ch A and ch B acquired from the CPU 50 of the camera main body 10.

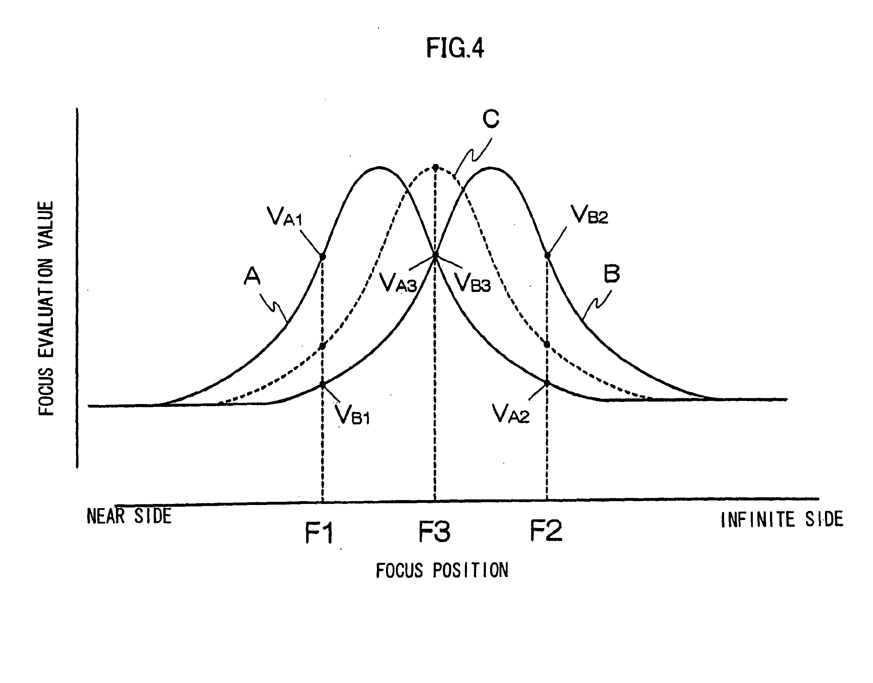

FIG. 4 is a figure showing a situation of the focus evaluation values with respect to focus positions when photographing a subject, where the horizontal axis shows positions of the focus lens FL of a photographing lens (focus positions) and the vertical axis shows the focus evaluation value. In the figure, the curve C indicated by a dotted line shows the focus evaluation value with respect to the focus position, when it is assumed that the focus evaluation value is obtained from a video signal from the imaging element for video (or an imaging element arranged in a position conjugated with the imaging element for video). The curves A, B shown by solid lines in the figure indicate the focus evaluation values of the ch A and the ch B obtained from the imaging elements 26A, 26B for AF with respect to the focus position, respectively. In the figure, the position F3 where the focus evaluation value of the curve C is the maximum (local maximum) is the focusing position.

In the case where the focus position of the photographing lens 14 is set to F1 in the figure, the focus evaluation value V_{A1} of the ch A becomes a value corresponding to the position F1 of the curve A, and the focus evaluation value V_{B1} of the ch B becomes a value corresponding to the position F1 of the curve B. In this case, the focus evaluation value V_{A1} of the ch A becomes larger than the focus evaluation value V_{B1} of the ch B, so that it is understood that the focus position is set to the side nearer than the focusing position (F3), that is, to a front focus state.

On the other hand, in the case where the focus position of the photographing lens 14 is set to the position F2 in the figure, the focus evaluation value V_{A2} of the ch A becomes a value corresponding to the position F2 of the curve A, and the focus evaluation value V_{B2} of the ch B becomes a value corresponding to the position F2 of the curve B. In this case, the focus evaluation value V_{A2} of the ch A becomes smaller than the focus evaluation value V_{B2} of the ch B, so that it is understood that the focus position is set to the infinite side beyond the focusing position (F3), that is, to a rear focus state.

On the other hand, in the case where the focus position of the photographing lens 14 is set to F3, i.e., to the focusing position, the focus evaluation value V_{A3} of the ch A becomes a value corresponding to the position F3 of the curve A, and the focus evaluation value V_{B3} of the ch B becomes a value corresponding to the position F3 of the curve B. In this case, the focus evaluation value V_{A3} of the ch A and the focus evaluation value V_{B3} of the ch B becomes equal, so that it is understood that the focus position is set to the focusing position (F3).

In this way, the focus evaluation values of the ch A and the ch B make it possible to detect in which state of front focus, rear focus or focusing the current focus state of the photographing lens 14 is. Then, the CPU 30 of the lens device 12 controls the position of the focus lens FL based on the focus evaluation value of the ch A and the ch B acquired from the CPU 50 of the camera main body 10, and moves the focus lens FL to the focusing position. That is, in the case where the focus evaluation value of the ch A and the ch B is determined to be a front focus, the focus lens FL is moved to the infinite side, and in the case where the focus evaluation value of the ch A and the ch B is determined to be a rear focus, the focus lens FL is moved in a close-range direction, and in the case where the focusing is determined to be effected, the focus lens FL is stopped at the position, as a result of which the focus lens FL is set to the focusing position.

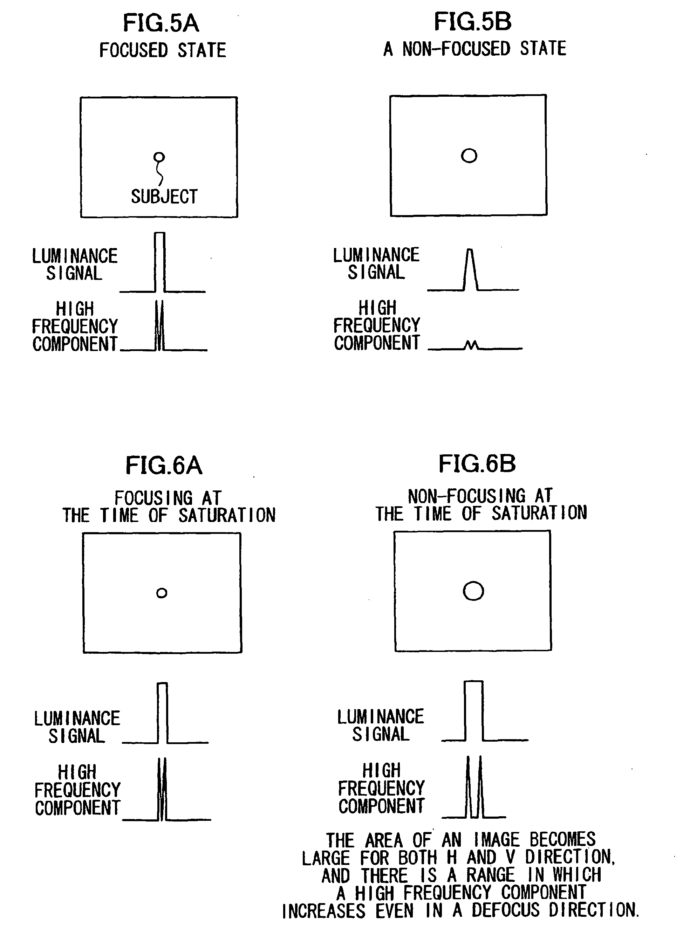

Next, the exposure adjustment for AF for the camera main body 10 in the system according to the present invention is explained. The exposure adjustment for AF is processing for adjusting the luminance level (level of a luminance signal) of a video signal acquired from the imaging elements 26A, 26B for AF to an appropriate level, and for obtaining an accurate focus evaluation value. FIGS. 5A, 5B, 6A and 6B represent a comparison of the level of high frequency components of luminance signals between the case where the level of the luminance signal is appropriate and the case where the level of the luminance signal is inappropriate. FIGS. 5A and 5B show the case where the level of the luminance signal is appropriate, and FIG. 5A shows the luminance signal for a subject in the middle of the screen and its high frequency component signal when the focus of the photographing lens 14 is in the focused state on the subject in the middle of the screen. FIG. 5B shows the luminance signal for the subject (the same subject as that shown in FIG. 5A) in the middle of the screen and its high frequency component signal when the focus of the photographing lens 14 is in a non-focused state to the same subject as that shown in FIG. 5A. In this case, compared with the focused state, the image of the subject in the middle of the screen is blurred in the non-focused state and the signal of the high frequency component becomes small. Therefore, the focus evaluation value in this case becomes maximum when the focus of the photographing lens 14 is in the focused state, so that a proper result can be obtained.

On the other hand, FIGS. 6A and 6B show the case where the level of the luminance signal is too high and inappropriate. FIG. 6A shows the luminance signal for a subject in the middle of the screen and its high frequency component signal when the focus of the photographing lens 14 is in the focused state on the subject in the middle of the screen. FIG. 6B shows the luminance signal for the subject in the middle of the screen and its high frequency component signal when the focus of the photographing lens 14 is in a non-focused state to the same subject as that shown in FIG. 6A. In this case, although the image of the subject in the middle of the screen is blurred in the non-focused state compared with the focused state, since the level of the luminance signal is in a saturation state, the high frequency component signal does not become small. Rather, since both images in the horizontal and perpendicular direction become large, the high frequency components may more increase in the non-focused state than in the focused state, so that the focus evaluation value may become maximum in the non-focused state. Accordingly, if the exposure adjustment is not performed to allow the luminance signal to be an appropriate level, autofocus may malfunction.

For this reason, although the exposure adjustment for AF is arranged to be performed in the system according to the present invention, the exposure adjustment for AF in the system is not intended for the whole photographing range, but is performed for the range of AF area. That is, even if a subject with extremely high luminance or extremely low luminance is in the photographing range outside the AF area, the level of luminance signal corresponding to the AF area is not influenced by the subject, so that the exposure adjustment is arranged to be performed for enabling the luminance signal of the AF area to be an appropriate level.

The exposure adjustment for AF is performed by the maximum luminance detection circuit 62 and the shutter control circuit 64 which are shown in the side of the camera main body 10 in FIG. 3. The maximum luminance detection circuit 62 acquires the luminance signal of the AF area outputted by the gate circuit 52A, and detects, for example, the maximum value of the luminance signal obtained within the period of one field for every field. The maximum luminance detection circuit 62 may also detect the maximum value of the luminance signal outputted from the gate circuit 52B.

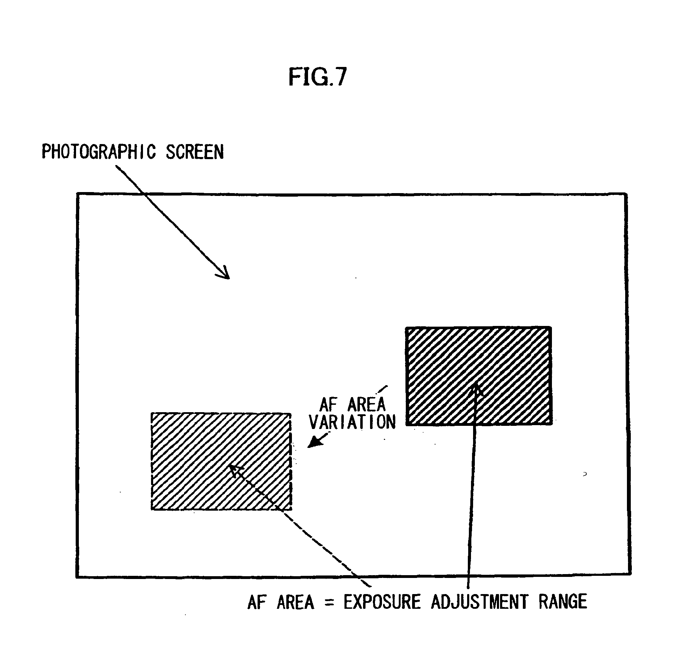

The maximum value detected by the maximum luminance detection circuit 62 is supplied to the shutter control circuit 64, and the shutter control circuit 64 controls the electronic shutter time (charge storage time) in the imaging elements 26A, 26B for AF so that the maximum value becomes an unsaturated value. Thereby, the luminance signal in the AF area is adjusted to an appropriate level. Although the position of the AF area etc. can be changed in the photographic screen in the system according to the present invention, since the exposure adjustment range is changed in such a manner that the object range of the AF area and the object range of the exposure adjustment (exposure adjustment range) coincide as shown in FIG. 7, the luminance signal in the AF area is adjusted to be an appropriate level.

In the exposure adjustment for AF, the luminance signal within the AF area may be adjusted to be an appropriate level, instead of using the electronic shutter function, by using a gain control function for adjusting the gain for the luminance signal, and also by means of a mechanical diaphragm (diaphragm arranged in a position which does not affect the subject light incident on the imaging element for video P) and the like.

In the above, although the above-mentioned embodiment explains the system which employs the so-called autofocus of the optical path length difference system using the two imaging elements 26A, 26B for AF, the present invention can be applied to a system which is provided with an imaging element for AF different from an imaging element for video, and which performs processing of autofocus based on the video signal obtained by the imaging element for the AF.

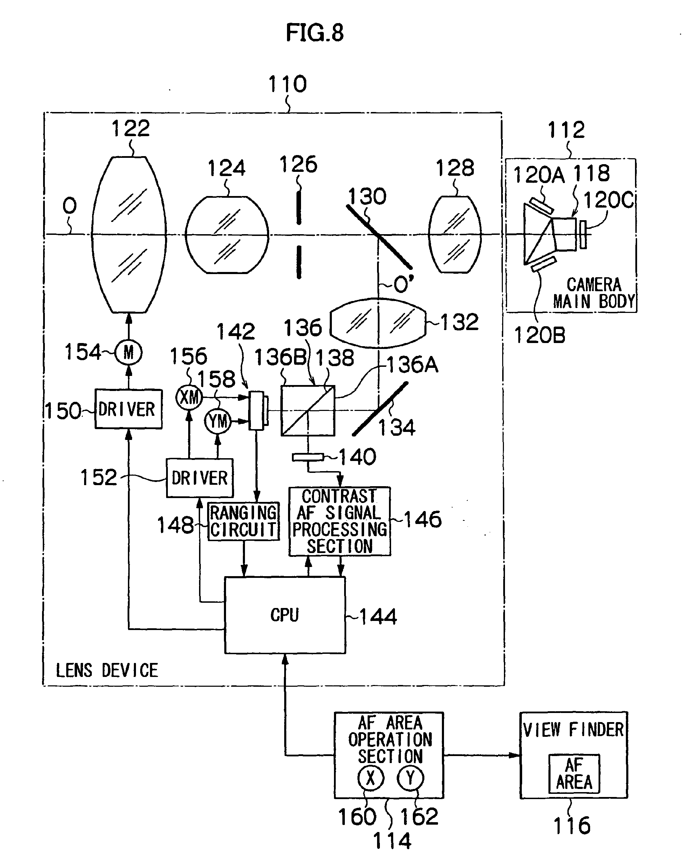

Next, another embodiment of the autofocus system according to the present invention is described below. FIG. 8 is a block diagram showing the whole configuration of the autofocus system to which the present invention is applied. The autofocus system shown in the figure is a system applied to a television camera for broadcast, and comprises a lens device 110, a camera main body 112, an AF area operation section 114, and a view finder 116 and the like.

The camera main body 112 comprises a three color separation optical system 118, CCDs 120A, 120B, 120C, etc., and a subject light passing through the photographic optical system (as will be described below) of the lens device 110 is decomposed into each wavelength component of R (red), G (green), and B (blue) by the three color separation optical systems 118, so as to form an image on each imaging surface (light receiving surface) of CCDs 120A to 120C which are arranged for R, G, and B, respectively. The picture signal of R, G, and B photo-electrically converted by each CCDs 120A to 120C is further subjected to necessary processing by a processing circuit (not shown) and thereafter converted into a video signal of a predetermined format (for example, NTSC system).

The lens device 110 comprises a photographic optical system (photographing lens) and a control system. The photographic lens is provided with a main optical path (optical path for photographing) and a suboptical path (optical path for AF). In the optical path for photographing, as in the known photographing lens, there are arranged a focus lens (group) 122 which moves in the direction of an optical axis O along the optical axis for focus adjustment, a zoom lens (group) 124 which moves in the direction of the optical axis for zoom adjustment (focal distance adjustment), an iris 126 which performs open/close operation for adjusting light quantity, and a master lens (group) 128 for eventually forming an optical image, and the like. Further, a half mirror 130 is arranged to a front side of the master lens 128, which half mirror 130 branches the optical path for AF from the optical path for photographing.

In the optical path for AF, there are arranged, an AF master lens (group) 132 for forming an image along the optical axis O, as in the case of the above-mentioned master lens 128, and also a total reflection mirror 134, a prism 136, a CCD 140 for AF, and a range finding module 142.

In the photographing lens, a subject light incident on the photographing lens passes through the focus lens 122, the zoom lens 124, and the iris 126, in the optical path for photographing, so as to be incident on the half mirror 130, and thereafter is branched to a subject light passing through the half mirror 130 and a subject light reflected by the half mirror 130.

The subject light passing through the half mirror 130 and advancing the optical path for photographing passes through the master lens 128 in the optical path for photographing, so as to be incident on the three color separation optical systems 118 of the camera main body 112. Then, as described above, the subject light is decomposed into the wavelength components for every R, G, and B by the three color separation optical systems 118, and the object image is formed on the imaging surface of CCDs 120A to 120C for R, G, and B, respectively.

On the other hand, the subject light reflected by the half mirror 130 and advancing along the optical path for AF passes through the AF master lens 132 of the optical path for AF and thereafter, is reflected by the total reflection mirror 134 so as to be incident on the prism 136. The prism 136 comprises a first prism 136A and a second prism 136B, and the bonded surface of the first prism 136A and the second prism 136B is a reflective surface 138 for reflecting a light having a wavelength of the visible light area. The subject light incident on the prism 136 is reflected by the reflective surface 138 so as to be incident on the imaging surface of CCD 140 for AF, thereby enabling the object image to be formed on the imaging surface of CCD 140 for AF under the effect of the AF master lens 132. Photographing conditions for the imaging surface of the CCDs 140 for AF, such as the distance to a subject for focusing on the imaging surface of the CCD 140 for AF and the photographing range, coincide with those for the imaging surface of the CCDs 120A to 120C of the camera main body 112, and a picture photographed by the CCD 140 for AF corresponds to a picture photographed by the CCDs 120A to 120C of the camera main body 112. The characteristic of the reflective surfaces 138 of the prism 136 is not limited to a characteristic of reflecting the light of the whole visible light area and may also be a characteristic of reflecting only a light having a wavelength of a specific color (for example, green) in the visible light area.

On the other hand, a range finding module 142 is a module for ranging with an active type trigonometrical range finding system, and comprises an optical unit provided with a light projecting section and a light receiving section (as will be described in details below). In the light projecting section of the optical unit, for example, an infrared LED is installed as a light emitting element, and an infrared light emitted from the infrared LED is arranged to be projected from the light projecting section as a range finding light. The reflective surface 138 of the prism 136 has a characteristic of transmitting a light having a wavelength of the infrared light area. The range finding light projected from the light projecting section is thus transmitted through the reflective surface 138 of the prism 136 and thereafter reflected by the total reflection mirror 134 and then transmitted through the AF master lens 132 so as to be incident on the half mirror 130 of the optical path for photographing. The half mirror 130 has a characteristic of totally reflecting a light having a wavelength of the infrared light area. The range finding light incident on the half mirror 130 is thus totally reflected by the half mirror 130 and thereafter transmitted through the iris 126, the zoom lens 124, and the focus lens 122, etc., in the optical path for photographing, in this sequence, so as to be projected toward a subject from the front face of the photographing lens.

The range finding light reflected by the subject and returned to the photographing lens, similarly to the above-mentioned subject light, is transmitted through the focus lens 122, the zoom lens 124, and the iris 126, in the optical path for photographing, and thereafter reflected by the half mirror 130 so as to be guided to the optical path for AF. Then, the range finding light is transmitted through the AF master lens 132 and reflected by the total reflection mirror 134 and thereafter transmitted through the prism 136 so as to be incident on the light receiving section of the optical unit of the range finding module 142.

Subsequently, the control system of the lens device 110 is described. In the lens device 110, there are mounted, as a control system for performing AF, a CPU 144, a contrast AF signal processing section 146 (hereinafter referred to as AF signal processing section 146), the ranging circuit 148, drivers 150, 152, motors 154, 156, 158, etc.

The AF signal processing section 146 is arranged to be supplied from the CCD 140 for AF with a photographic picture successively imaged by the above-mentioned CCD 140 for AF, as a video signal (luminance signal). The video signal supplied from the CCD 140 for AF is, for example, based on the interlace scheme, and is assigned a photographic picture successively imaged by the CCD 140 for AF in every cycle (one field) of the vertical synchronizing signal of the video signal.

The AF signal processing section 146 detects the contrast (level) of the successively imaged photographic picture based on the video signal supplied from the CCD 140 for AF. The method for detecting contrast is known, for example, which extracts the high frequency components of a video signal by filtering processing (high pass filtering processing) and integrates the high frequency components for every field. The integrated value is the focus evaluation value indicating the contrast level of the photographic picture, and the focus evaluation value for every field thus obtained enables the contrast of the photographic picture imaged successively by the CCD 140 for AF to be detected. The contrast of the photographic picture of the CCD 140 for AF thus detected also indicates the contrast of the photographic picture of the CCDs 120A to 120C of the camera main body 12.

When detecting the contrast of a photographic picture, the AF signal processing section 46 limits the integration range for obtaining the focus evaluation value to the range of AF area specified by the CPU 144 (position and magnitude) from the video signals of each field (high frequency components of a video signal). Thereby, the focus evaluation value indicating the contrast of the picture in the AF area (subject) is obtained. Here, the AF area indicates a range of a subject for focusing by AF, i.e., the AF object range, and is set to a range within a photographing range, for example within a rectangular shape. The setting of the AF area will be described in detail below.

In this way, the focus evaluation value detected by the AF signal processing section 46 is supplied to the CPU 144 by the instruction from the CPU 144.

The ranging circuit 148 is arranged to be supplied with a detection signal outputted from the above-mentioned light receiving section of the range finding module 142. In the light receiving section, there is arranged a light position detecting element for receiving the range finding light which is projected by the above-mentioned light projecting section and reflected by the subject so as to be returned and detecting the light receiving position, and the light receiving section is arranged to output the detection signal indicating the position based on the range finding light received by the light position detecting element.

The ranging circuit 148 performs ranging in accordance with the instruction from the CPU 144. When performing ranging, the ranging circuit 148 enables the light projecting section of the range finding module 142 to emit a light, and obtain the above-mentioned detection signal, i.e., the detection signal indicating the position where the range finding light is received from the light receiving section. Then, the ranging circuit 148, based on the detection signal, calculates the ranging value indicating the distance to the subject projected by the range finding light in accordance with the principle of the triangular ranging. The range finding value thus calculated is supplied to the CPU 144.

The CPU 144 supplies a control signal to the driver 150 of the motor 154 connected with the focus lens 122 to perform control of the motor 154, based on the focus evaluation value acquired from the AF signal processing section 146 and the range finding value acquired from the ranging circuit 148, as mentioned above, so as to move the focus lens 122 to the position for focusing (focusing position).

Here, the AF system, in which the focus lens 122 is set to the focusing position based on the focus evaluation value acquired from the AF signal processing section 146, is a known contrast system, and when moving the focus lens 122 to the focusing position in this system, for example, the mountain climbing system is used. Although the particular explanation is omitted, for example, the focus evaluation values are suitably acquired from the AF signal processing section 146 while moving the focus lens 122, and the direction in which the focus evaluation value increases is detected from the focus evaluation values obtained in several points, and the focus lens 122 is moved in the direction. In the position where the direction in which the focus evaluation value increases is not detected, i.e., the focused state representing a peak of the focus evaluation value is detected, the focus lens 122 is stopped in the position. Thereby, the focus lens 122 is set to the focusing position so as to enable the image photographed by the CCDs 120A to 120C of the camera main body 112 to be focused on the subject in the AF area.

On the other hand, the AF system, in which the focus lens 122 is set to the focusing position based on the range finding value acquired from the ranging circuit 148, as is well known, is an active type trigonometrical range finding system (hereinafter referred to as simply the trigonometrical range finding system). When moving the focus lens 122 to the focusing position in this system, for example, the focus lens 122 is moved to the focusing position corresponding to the range finding value acquired from the ranging circuit 148, by referring to the data which have been memorized beforehand and represent the relation between the distance of the subject to be focused and the position of the focus lens (focusing position) at the time of focusing. This enables the focus lens 122 to be set to the focusing position and the image photographed by the CCDs 120A to 120C of the camera main body 112 to be focused on the ranged subject. A subject ranged by the range finding module 142 and the ranging circuit 148, as will be described below, is the subject within the same AF area as AF of the above-mentioned contrast system, so that the subject within the AF area can also be focused in AF of the trigonometrical range finding system.

Although the CPU 144 can effect accurate focusing irrespective of the condition of a subject by performing AF in combination of the contrast system and the trigonometrical range finding system based on the focus evaluation value and the range finding value, the way of combining each system is not particularly limited in the present invention. For example, in the case where AF of the contrast system is arranged as the standard AF and the focus evaluation value acquired from the AF signal processing section 146 is smaller than a predetermined value because a subject is dark or because the contrast of a subject is originally low, a system can be applied in which detection of the focusing position in AF of the contrast system is judged to be difficult and only in this case, AF of the active type trigonometrical range finding system is performed.

In addition, it is also possible to apply a combination method in which based on the assumption that the focus lens 122 is shifted from the focusing position, a rough focusing is at first performed by the trigonometrical range finding system and then a high-precision AF is performed by the AF of the contrast system.

Further, AF system may be switched in such a way that a switch for allowing the user to select AF of the contrast system and AF of the trigonometrical range finding system is provided for performing AF in accordance with the system selected by the switch.

Next, setting of the AF area is described. As shown in FIG. 8, the AF area operation section 114 is connected to the lens device 110, and the AF area information specifying ranges of the AF area (position and size, etc.) within a photographing range (within the screen display of a photographic picture) is arranged to be transmitted to the above-mentioned CPU 144 from the AF area operation section 114.

In the AF area operation section 114, there are provided a X switch 160 for moving the range of AF area (position) to the horizontal direction (X direction) on the screen display and a Y switch 162 for moving the range of AF area in the vertical direction, thereby allowing an operator, such as a photographer, to operate the switches 160, 162, so that the range of AF area specified in the CPU 144 is changed to desired upper, lower, left and right positions on the screen display. Although the size and shape of the AF area can be modified, the size of the AF area, in the embodiment according to the present invention, is assumed to be fixed to a predetermined size, and the shape of AF area is also assumed to be fixed in the shape of a rectangle. It is also assumed that the information of position and size of the AF area is transmitted to the CPU 144 as the information indicating the range of the AF area, and that the shape of the AF area is set to the shape of a rectangle without particularly specifying the shape of the AF area.

The range of the AF area specified by the AF area operation section 114 is also supplied to the camera main body 112, and a picture of the AF area frame representing the range of AF area (contour) specified by the AF area operation section 114 is synthesized with the video signal acquired from the CCDs 120A to 120C of the camera main body 112, so that the resultant synthesized signal is outputted to the view finder 116 installed in the camera main body 112 and the like.

Thereby, in the screen display of the view finder 116, the range of the AF area (AF area frame) is displayed along with the real time image photographed by the CCDs 120A to 120C of the camera main body 112. Accordingly, the operator is able to operate the AF area operation section 114 so as to make a subject desired to be focused set to be within the AF area frame while viewing the image of a view finder. In FIG. 8, the flow of information in the display of the AF area is simplified.

The CPU 144 receives the AF area information from the AF area operation section 114, and determines the range of the AF area in accordance with the AF area information. Further, the CPU 144 specifies the range of the AF area in the AF signal processing section 146 as described above, and acquires from the AF signal processing section 146 the focus evaluation value obtained from the video signal of the range of the AF area. Thereby, the object to be focused by AF of the contrast system is set to the subject within AF area specified by the AF area operation section 114.

The CPU 44 outputs a control signal to the driver 152 of motors (direct-acting motors) 156, 158 for advancing straight the above-mentioned range finding module 42 in the X direction (horizontal direction) and Y direction (perpendicular direction) so as to control the direct-acting motors 156, 158, and moves the range finding module 142 to the position corresponding to the range of the AF area determined in accordance with the AF area information from the AF area operation section 14. This enables the subject to be focused by AF of the trigonometrical range finding system to be set to the subject in the AF area specified by the AF area operation section 114.

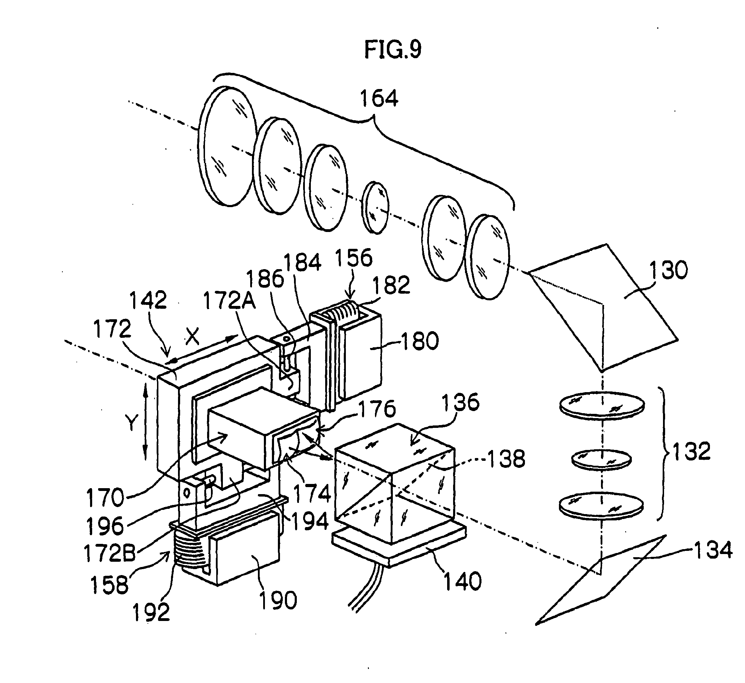

Here, FIG. 9 is a perspective view showing the schematic configuration including the range finding module 142, the direct-acting motors 156, 158 and the optical path of the photographing lens to the range finding module 142. As shown in the figure, in the optical path to the range finding module 142, there are arranged each lens 164 schematically showing the focus lens 122 and the zoom lens 124, etc. (see FIG. 8) which are arranged between the front face of the photographing lens and the half mirror 130, and the half mirror 130, the AF master lens 132 of the optical path for AF, the total reflection mirror 134, and the prism 136, etc., and the range finding module 142 is arranged on the rear stage side of the prism 136.

The range finding module 142 comprises an optical unit 170 and a base plate 172, and in the optical unit 170 of which side is covered by a case 172A, the above-mentioned light projecting section 174 and light receiving section 176, on the front faces of which lenses are provided, are arranged adjacently in the horizontal direction. As described above, the range finding light having a wavelength of the infrared light area and emitted from the light projecting section 174 is transmitted through the reflective surface 138 of the prism 136, and thereafter projected from the front face of the photographing lens toward a subject via the total reflection mirror 134, the AF master lens 132, the half mirror 130 and each lens 164 in the optical path for photographing. Then, the range finding light, which is reflected by the subject and returned, reversely traces the same optical path so as to be incident on the light receiving section 176. The subject light of the visible light area incident on the photographing lens is reflected by the reflective surface 138 of the prism 136 so as to be incident on the CCD 140 for AF.

On the other hand, the base plate 172 of the range finding module 142 is fixed with the above-mentioned optical unit 170 at the front face and projectingly provided in the lower and side parts with connecting sections 172A, 172B having through holes. Guide rods 186, 196 (as will be described below) are inserted in the through holes of each connecting sections 172A, 172B, and the base plate 172 is supported by the guide rods 186, 196. The ranging circuit 148 shown in FIG. 8 may be arranged in the base plate 172.

Each direct-acting motor 156, 158 is, for example, a voice coil motor and comprises yokes 180, 190 fixed to predetermined positions, such as to the lens barrel of the photographing lens, and moving parts 184, 194 to which voice coils 182, 192 are fixed. The moving parts 184, 194 are formed to be U-shaped and the above-mentioned guide rods 186, 196 are supported by projected parts at both ends of the moving parts. As described above, each guide rod 186, 196 is inserted into the through hole of the connecting sections 172, 174 projectingly provided for the base plate 172. When a current in the predetermined direction is allowed to flow through the voice coil 182, 192 of each direct-acting motor 156, 158, the moving parts 184, 194 are driven to advance straight due to an interaction of the magnetic field generated in yokes 180, 190 with the current flowing through the voice coils 182, 192, so that the guide rods 186, 196 are moved in the direction perpendicular to the axis of the guide rods.

Accordingly, when the current in the predetermined direction is allowed to flow through the voice coil 182 of the direct-acting motor 156 so as to enable the moving part 184 of the direct-acting motor 156 to be driven to advance straight, the range finding module 142 is moved in the direction of X by the driving force under guidance of the guide rod 196 of the direct-acting motor 158, and when the current in the predetermined direction is allowed to flow through the voice coil 192 of the direct-acting motor 158 so as to enable the moving part 194 of the direct-acting motor 156 to be driven to advance straight, the range finding module 142 is moved in the direction of Y by the driving force under guidance of the guide rod 186 of the direct-acting motor 156. This enables the range finding module 142 to be displaced and the light projecting section 174 and the light receiving section 176 of the optical unit 170 to be displaced within the X-Y plane vertical to the optical axis O' of the photographing lens. In addition, the position of the range finding light projected from the light projecting section 174 is changed within the photographing range to which the range finding light is projected.

In this way, the range finding module 142 is displaced by the direct-acting motors 156, 158 and the position of the light projecting section 174 and the light receiving section 176 is changed in accordance with the range of the AF area (position) specified by the AF area operation section 114 as described above, thereby enabling the range finding light from the light projecting section 174 to be projected onto the subject in the AF area, and an object of AF of the trigonometrical range finding system to be set to the subject in the AF area.

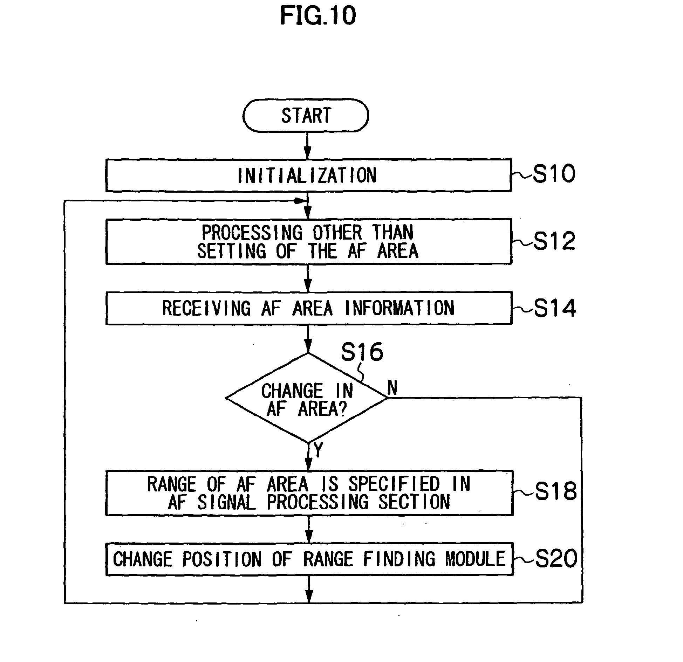

Next, the processing procedure for setting the AF area in the CPU 144 is described by using a flow chart shown in FIG. 10. After turning on a power supply, the CPU 144 performs a necessary initial setting (step S10) and thereafter repeatedly performs subsequent processing from step S12 to step S20. First, the CPU 144 performs processing other than setting of the AF area (step S12). The CPU 144 then receives the AF area information, i.e., the information on the position and the size of the AF area which determines the range of the AF area, from the AF area operation section 114 (step S 14). The CPU 144 then discriminates whether the range of the AF area specified by the AF area information is changed relative to the range of AF area presently set (the range of the AF area specified last time) (step S 16). When determining negatively, the CPU 144 returns to processing of step S12, without performing processing of steps S18 and S20 for changing the AF area.

On the other hand, When determining positively in step 16, the CPU 144 changes the range of the AF area (position and size) to the range newly specified by the AF area operation section 114 and specifies the range (position and size) of the newly changed AF area to the AF signal processing section 146 (step S 18). Subsequently, the CPU 144 performs control of the direct-acting motors 156, 158 so as to change the position of the ranging module 142 (position of the light projecting section 174 and the light receiving section 176) to a position corresponding to the range of the new AF area (position) (step S20).

By repeating the above processing from step S 12 to step S20, the object of the contrast system and of the trigonometrical range finding system is specified by the AF area operation section 114 so as to be set and changed to the subject in the AF area.

In the above, although in the above-mentioned embodiment, the autofocus system for performing automatic focus adjustment in combination of AF of the contrast system and AF of the active type trigonometrical range finding system has been described, the present invention can also be applied to the case where the range finding system of AF to be combined with AF of the contrast system is an active type or passive type range finding system other than the active type trigonometrical range finding system. When applying the active type range finding system, the system generally comprises the light projecting section and the light receiving section as in the trigonometrical range finding system in the above-mentioned embodiment, and the light projecting section and light receiving section are installed in a range finding module similar to the range finding module 142 for use in the trigonometrical range finding systems shown in FIGS. 8 and 9, and the range finding module is made movable in the X direction (horizontal direction) and Y direction (perpendicular direction), perpendicular to the optical axis, as shown in FIGS. 8 and 9.

On the other hand, when applying the passive type range finding system, the system generally comprises only the light receiving section and the light receiving section is installed in a range finding module similar to the range finding module 142 for use in the trigonometrical range finding systems shown in FIGS. 8 and 9, and the range finding module is made movable in the X direction (horizontal direction) and Y direction (perpendicular direction), perpendicular to the optical axis, as shown in FIGS. 8 and 9. In the case of the passive system, the subject light having a wavelength of a visible light area is typically received by the above-mentioned light receiving section, and in this case, the reflective surface 138 of the prism 136 shown in FIGS. 8 and 9 may be changed to a half mirror surface so as to branch the subject light incident on the CCD 140 for AF into the light receiving section of the range finding module. The double image matching system is well known as the passive type range finding system, and in the double image matching system, two light receiving sections provided with light receiving element arrays are arranged horizontally in the range finding module.

Further, although in the above-mentioned embodiment, a video signal for detecting the contrast of a photographic picture in AF of the contrast system is arranged to be acquired from the CCD 140 for AF, a video signal obtained from the CCD 120A to 120C of the camera main body 12 may be arranged to be acquired so as to enable the contrast of a photographic picture to be detected from the video signal without the use of the CCD 140.

Moreover, the present invention is not limited to a television camera but can be applied to a camera using autofocus of the contrast system.

## Claims

1. An autofocus system (110, 112, 114, 116) comprising:
a range finding device (148) which ranges a distance to a subject in an AF area which is an object range of AF within the whole photographing range photographed via a photographing lens (128); and
an AF control device (144, 150, 154) which performs control of autofocus based on a range finding value detected by the range finding device (148) and which automatically performs focusing on the subject,
**characterized by comprising:**
an optical path for AF (O') branched for autofocus from the optical path (O) of the photographing lens (128);
a range finding module (142) arranged in the optical path for AF (O') and provided with an optical element of the range finding device (148);
a driving device (144, 152, 156, 158) which moves the range finding module (148) within a surface perpendicular to the optical axis of the optical path for AF (O');
an AF area assigning device (114) which assigns the range of the AF area; and a control device (144) which moves the range finding module (142) by means of the driving device (144, 152, 156, 158) and which controls the position of the range finding module (142) so that a subject ranged by the range finding device (148) becomes the subject within the AF area assigned by the AF area assigning device (114).

2. The autofocus system (110, 112, 114, 116) according to claim 1, **characterized by** further comprising a contrast detection device (146) which detects a contrast of a subject within the AF area in the whole photographing range photographed via the photographing lens (128),
wherein the AF control device (144, 150 154) performs control of autofocus based on an evaluation value of a contrast detected by the contrast detection device and/or a range finding value detected by the range finding device (148) so as to automatically perform focusing on the subject.

3. The autofocus system (110, 112, 114, 116) according to claim 2, **characterized in that** the contrast detection device (146) images a subject by means of a subject light guided to the optical path for AF (O') and detects a contrast of the subject.

4. The autofocus system (110, 112, 114, 116) according to claim 1 or 2, **characterized in that** the range finding method of the range finding device (148) is a trigonometrical range finding method, and optical elements of the range finding module (142) include a light emitting element (174) which emits a range finding light and a light receiving element (176) which receives the range finding light.

5. The autofocus system (110, 112, 114, 116) according to claim 1 or 2, **characterized in that** the range finding method of the range finding device is a double image matching method, and an optical element of the range finding module (142) is a light receiving element which receives a subject light from a subject.

## Patentansprüche

1. Autofokussystem (110, 112, 114, 116) umfassend:
eine Entfernungsmesseinrichtung (148), die eine Entfernung zu einem Objekt in einer AF-Fläche, die einen Objektbereich von AF innerhalb des gesamten fotografischen Bereichs, der durch ein Fotografie-Objektiv (128) fotografiert wird, darstellt, misst; und
eine AF-Steuereinrichtung (144, 150, 154), die eine Steuerung von Autofokus basierend auf einem Entfernungswert ausführt, der von der Entfernungsmesseinrichtung (148) ermittelt wird, und die automatisch ein Fokussieren auf das Objekt ausführt,
**dadurch gekennzeichnet, dass** sie umfasst:
einen optischen Weg für AF (O'), für Autofokus abgezweigt von dem optischen Weg (O) des Fotografie-Objektivs (128);
ein Entfernungsmessmodul (142), das in dem optischen Weg für AF (O') angeordnet ist und mit einem optischen Element der Entfernungsmesseinrichtung (148) versehen ist;
eine Antriebseinrichtung (144, 152, 156, 158), die das Entfernungsmessmodul (148) innerhalb einer Fläche senkrecht zu der optischen Achse des optischen Wegs für AF (O') bewegt;
eine Einrichtung (114) zur Zuweisung der AF-Fläche, die den Bereich der AF-Fläche zuweist; und
eine Steuereinrichtung (144), die das Entfernungsmessmodul (142) mithilfe der Antriebseinrichtung (144, 152, 156, 158) bewegt, und die die Position des Entfernungsmessmoduls (142) so steuert, dass ein Objekt, dass von der Entfernungsmesseinrichtung (148) ausgemessen wird, das Objekt innerhalb der AF-Fläche wird, die durch die Einrichtung (114) zur Zuweisung der AF-Fläche zugewiesen wird.

2. Das Autofokussystem (110, 112, 114, 116) gemäß Anspruch 1, **dadurch gekennzeichnet, dass** es weiterhin eine Kontrastermittlungseinrichtung (146) umfasst, die einen Kontrast eines Objekts innerhalb der AF-Fläche in dem gesamten Fotografie-Bereich, der durch das Fotografie-Objektiv (128) fotografiert wird, ermittelt.

3. Das Autofokussystem (110, 112, 114, 116) gemäß Anspruch 2, **dadurch gekennzeichnet, dass** die Kontrastermittlungseinrichtung (146) ein Objekt mithilfe eines Objektlichts abbildet, das zu dem optischen Weg für AF (O') geleitet wird, und einen Kontrast des Objekts ermittelt.

4. Das Autofokussystem (110, 112, 114, 116) gemäß Anspruch 1 oder 2, **dadurch gekennzeichnet, dass** das Entfernungsmessverfahren der Entfernungsmesseinrichtung (148) ein trigonometrisches Entfernungsmessverfahren ist und optische Elemente des Entfernungsmessmoduls (142) ein lichtaussendendes Element (174), das ein Entfernungsmesslicht aussendet, und ein lichtempfangendes Element (176), welches das Entfernungsmesslicht empfängt, einschließen.

5. Das Autofokussystem (110, 112, 114, 116) gemäß Anspruch 1 oder 2, **dadurch gekennzeichnet, dass** das Entfernungsmessverfahren der Entfernungsmesseinrichtung ein Doppelbildabgleichungsverfahren ist und ein optisches Element des Entfernungsmessmoduls (142) ein lichtempfangendes Element ist, das ein Objektlicht von einem Objekt empfängt.

## Revendications

1. Système autofocus (110, 112, 114, 116), comprenant :
un dispositif de recherche de plage (148) qui parcourt une distance jusqu'à un sujet dans une zone AF qui est une plage d'objet d'AF dans toute la plage photographique photographiée via un objectif photographique (128) ; et
un dispositif de commande AF (144, 150, 154) qui réalise une commande d'autofocus basée sur une valeur de recherche de plage détectée par le dispositif de recherche de plage (148) et qui réalise automatiquement la mise au point sur le sujet,
**caractérisé en ce qu'il comprend :**
un chemin optique pour AF (O') dérivé pour l'autofocus à partir du chemin optique (O) de l'objectif photographique (128) ;
un module de recherche de plage (142) agencé dans le chemin optique pour AF (O') et doté d'un élément optique du dispositif de recherche de plage (148) ;
un dispositif d'entraînement (144, 152, 156, 158) qui déplace le module de recherche de plage (148) dans une surface perpendiculaire à l'axe optique du chemin optique pour AF (O') ;
un dispositif d'attribution de zone AF (114) qui attribue la plage de la zone AF ;
et un dispositif de commande (144) qui déplace le module de recherche de plage (142) au moyen du dispositif d'entraînement (144, 152, 156, 158) et qui commande la position du module de recherche de plage (142) de sorte qu'un sujet parcouru par le dispositif de recherche de plage (148) devienne le sujet dans la zone AF attribuée par le dispositif d'attribution de zone AF (114).

2. Système autofocus (110, 112, 114, 116) selon la revendication 1, **caractérisé en ce qu'**il comprend en outre un dispositif de détection de contraste (146) qui détecte un contraste d'un sujet dans la zone AF dans toute la plage photographique photographiée via l'objectif photographique (128),
dans lequel le dispositif de commande AF (144, 150, 154) réalise une commande d'autofocus basée sur une valeur d'évaluation d'un contraste détecté par le dispositif de détection de contraste et/ou d'une valeur de recherche de plage détectée par le dispositif de recherche de plage (148) de manière à réaliser automatiquement la mise au point sur le sujet.

3. Système autofocus (110, 112, 114, 116) selon la revendication 2, **caractérisé en ce que** le dispositif de détection de contraste (146) image un sujet au moyen d'une lumière du sujet guidée vers le chemin optique pour AF (O') et détecte un contraste du sujet.

4. Système autofocus (110, 112, 114, 116) selon la revendication 1 ou 2, **caractérisé en ce que** le procédé de recherche de plage du dispositif de recherche de plage (148) est un procédé de recherche de plage trigonométrique, et des éléments optiques du module de recherche de plage (142) comprennent un élément d'émission de lumière (174) qui émet une lumière de recherche de plage et un élément de réception de lumière (176) qui reçoit la lumière de recherche de plage.

5. Système autofocus (110, 112, 114, 116) selon la revendication 1 ou 2, **caractérisé en ce que** le procédé de recherche de plage du dispositif de recherche de plage est un procédé de mise en correspondance à deux images, et un élément optique du module de recherche de plage (142) est un élément de réception de lumière qui reçoit une lumière du sujet provenant d'un sujet.
